# EUROPÄISCHE PATENTSCHRIFT

(11) **EP 0 508 158 B1**
(45) Veröffentlichungstag und Bekanntmachung des Hinweises auf die Patenterteilung: **10.04.1996**
(21) Anmeldenummer: 92104445.9
(22) Anmeldetag: 15.03.1992
(51) Int. Cl.: C04B 28/02, C04B 24/00

(54) **Abbindeverzögerer für das Nassspritzverfahren**
Set retarder for wet spraying
Retardateur de prise pour la projection humide

(30) Priorität: 12.04.1991 CH 1099/91
(43) Veröffentlichungstag der Anmeldung: 14.10.1992
(73) Patentinhaber: Sika AG, vorm. Kaspar Winkler & Co., CH-8048 Zürich (CH)
(72) Erfinder: Bürge, Theodor A., CH-8954 Geroldswil (CH); Mäder, Urs, CH-8500 Frauenfeld (CH)
(74) Vertreter: Blum, Rudolf Emil Ernst

(56) Entgegenhaltungen:
- EP-A- 0 177 308
- EP-A- 0 465 991
- FR-A- 2 230 600
- GB-A- 2 240 334
- US-A- 4 040 854
- CHEMICAL ABSTRACTS, Band 104, Nr. 2, 13. Januar 1986, Columbus, OH (US); Seite 258, Nr. 9781d
- CHEMICAL ABSTRACTS, Band 105, Nr. 2, Juli 1986, Columbus, OH (US); Seite 294, Nr. 11015w

## Beschreibung

Die Erfindung betrifft einen neuen Abbindeverzögerer für das Nassspritzverfahren.

Die Abbindeverzögerung von Mörtel und Beton hat heute einen festen Platz im Bau eingenommen.

Im unverzögerten Mörtel und Beton beginnt der Abbindeprozess nach 1 bis 5 Stunden, je nach Temperatur und Zementart.

Durch geeignete Zusatzmittel kann der Zeitpunkt des Abbindebeginns um einige Stunden oder sogar Tage hinausgeschoben werden, wodurch der Mörtel und Beton länger transportierbar, vibrierbar und verformbar bleibt. Dadurch eröffneten sich dem Ingenieur, Architekten und Unternehmer interessante Wege für sein Schaffen. Durch die gewünschte Abbindeverzögerung wird der anschliessende Erhärtungsprozess keinesfalls verlangsamt. Im Gegenteil, ein guter Abbindeverzögerer wirkt, sobald die Erhärtung einsetzt, gleichzeitig als Erhärtungsbeschleuniger. Bekannte, abbindeverzögernde Zusatzmittel enthalten Polyhydroxylverbindungen wie Saccharose, Glucose, Polyalkohole oder andere zuckerähnliche Stoffe, Hydroxy- und Polyhydroxycarbonsäuren und deren Salze wie Adipin-, Zitronen-, Itacon-, Milch-, Wein-, Malon- und Fumarsäure, anorganische Phosphorverbindungen wie Ortho-, Meta-, Pyro- oder Polyphosphate. Als organische Phosphorverbindungen wurden Phosphonsäuren mit Hydroxyl- und/oder Aminogruppen, z.B."Dequest" der Firma Monsanto, vorgeschlagen.

Es ist bereits bekannt, und in der EP-A 0 177 308 beschrieben, Phosphonsäuren als Verzögerungsmittel für das Zementieren von Bohrlöchern zu verwenden. Die Anforderungen dabei sind jedoch besonders auf hohe Temperaturen ausgelegt, welche 200°C übersteigen können. Bei dieser Bohrschlämme wird Zement und Wasser als Slurry verwendet.

Beschrieben wird auch eine Zumischung von Abbindebeschleunigern, allerdings zu der Ausgangsmischung und nicht erst zu einem späteren Zeitpunkt. Die vorgeschlagenen Beschleuniger wie Natriumsilikatlosung, Paraformaldehyd oder Calciumchlorid sind bei Nassspritzverfahren heute nicht mehr brauchbar. Natriumsilikat bewirkt einen Abfall der Druckfestigkeit um über 50 %, Paraformaldehyd ist giftig und Calciumchlorid führt zu Korrosion an den Armierungseisen. Bei der Bohrlochzementierung spielen diese Nachteile keine grosse Rolle.

In der FR-A 2 230 600 werden Phosphonsäuren als Abbindeverzögerer für Gips angesprochen.

Die Abbindeverzögerer haben auch einen gewissen Dispergierungseffekt, welcher eine Viskositätsverminderung des Bindemittel-Wasser-Gemisches bewirkt; dadurch wird eine gute Verarbeitbarkeit bei tieferem Wassergehalt erreicht.

Geringerer Wasserzusatz bewirkt aber nicht nur eine Verbesserung sämtlicher Betoneigenschaften, sondern auch einen raschen Verlust der Verarbeitbarkeit des Mörtels und Betons durch Ansteifen des Bindemittel-Wasser-Gemisches.

Durch Kombination von verschiedenen der beschriebenen Abbindeverzögerer kann dieses Ansteifen mindestens zum Teil verzögert werden. Besonders geeignete Kombinationen sind solche mit einer Tricarbonsäure wie Zitronensäure.

Die Entwicklung im Spritzbeton und in der maschinellen Betonsanierung geht immer mehr in Richtung des Nassspritzverfahrens. Die Vorteile liegen in der hohen Spritzleistung, der hohen, konstanten Qualität des Endproduktes, des minimalen Rückpralls und der geringen Staubentwicklung. Das Nassspritzverfahren von Mörtel und Beton ist bisher nur auf Grossbaustellen zum Einsatz gekommen, weil das Verfahren nur bei grossen Spritzleistungen mit grossen Beton- und Mörtelkubaturen wirtschaftlich war. Ein Nassspritzbeton oder -mörtel kann nur in einer weichplastischen Konsistenz verarbeitet werden. Bisher war es nicht möglich, die Konsistenz des Betons oder Mörtels über Stunden oder Tage konstant zu halten. Damit eine pumpfähige Konsistenz und eine optimale Beschleunigung erzielt werden konnte, musste der Beton oder Mörtel kurz vor der Verarbeitung mit einem Betonverflüssiger (BV) oder Hochleistungsbetonverflüssiger (HBV) auf der Baustelle aufgemischt werden. Nicht alle Fahrmischer sind in der Lage, kleine Dosierungen von Verflüssigern optimal zu vermischen. Bei Unterbrüchen steifte der Beton rasch an, so dass die Schlauchleitungen und allenfalls die Spritzmaschine bei einem längeren Unterbruch gereinigt werden mussten. Das Reinigen der Nassspritzmaschine ist gegenüber dem Reinigen der Trockenspritzmaschine immer als entscheidender Nachteil dargestellt worden. Das Reinigen der Nassspritzmaschine erfolgt mit sehr viel Wasser durch Ausspülen sämtlicher Teile, während im Trockenspritzverfahren die Maschine und die Schläuche einfach mit der vorhandenen Pressluft ausgeblasen werden können. Bisher musste im Nassspritzverfahren immer der gesamte Fahrmischerinhalt verspritzt werden, was unter Umständen zu unnötigen Spritzschichten führte.

Gerade im innerstädtischen Baubetrieb, wo heute im 24-Stunden-Betrieb gearbeitet wird, musste ebenfalls das Betonwerk seinen Betrieb während 24 Stunden gewährleisten. Dadurch sind Klagen wegen Nachtruhestörung durch den Bauverkehrslärm eingegangen.

Im Trockenspritzverfahren ist das Trockengemisch mit einer Eigenfeuchte des Kies/Sandgemisches, die kleiner ist als 4 %, während maximal 4 Stunden haltbar.

Es stellt sich deshalb die Aufgabe, einen Abbindeverzögerer für das Nassspritzen von Mörtel und Beton bereitzustellen, der bewirkt, dass deren Abbindezeit verlängert und beispielsweise so stark verzögert ist, dass sie aus einem Transportbetonwerk auf die Baustelle geliefert werden können und dort während Stunden oder Tagen verarbeitbar bleiben, und dass sie, sofern notwendig, durch Zugabe eines Abbindebeschleunigers am Verwendungsort jederzeit rasch zum Erhärten bzw. zum sofortigen Ansteifen gebracht werden können.

Ein weiteres Ziel der Erfindung besteht ferner darin, Beton oder Mörtel für das Nassspritzverfahren so herzustellen, dass
- bei allfälliger Verwendung von Verflüssigern oder Hochleistungsverflüssigern, diese bereits im Betonwerk zugegeben werden können,
- der Beton oder Mörtel sich während einer Zeitspanne bis maximal zwei Tage in der Konsistenz nicht wesentlich verändert und förderbar bleibt,
- der Beton oder Mörtel jederzeit mit einem geeigneten Abbindebeschleuniger in Mengen, die das notwendige Abbindeverhalten garantieren, verspritzt werden kann,
- bei längeren Unterbrüchen die Maschine nicht gereinigt werden muss,
- trotz der Abbindeverzögerung kein Festigkeitsabfall in den Früh- und Endfestigkeiten auftritt.

Das besagte Ziel wird erreicht durch Abbindeverzögerer für hydraulische Bindemittel oder hydraulische Bindemittel in Mörtel oder Beton, die Phosphonoalkantricarbonsäuren, deren Salze und/oder Ester ein- und/oder mehrwertiger Alkohole enthalten.

Hydraulische Bindemittel, für die die erfindungsgemässen Abbindeverzögerer verwendet werden können, sind dem Fachmann gut bekannt. Beispielsweise wird der erfindungsgemässe Abbindeverzögerer unter anderem zusammen mit diversen Zementen, gebranntem Oelschiefer und hydraulisch härtendem Kalk verwendet.

Die Phosphonoalkantricarbonsäuren, deren Salze und/oder Ester verzögern das Ansteifen des Zementleims nicht nur in dem Rahmen, wie das von herkömmlichen Abbindeverzögerern bekannt ist, sondern sie verhindern dies während Stunden oder Tagen praktisch vollständig.

Ueberraschend wurde gefunden, dass ein derart langzeitverzögerter Beton oder Mörtel, den Baustellenbedingungen entsprechend, jederzeit mit einem hochreaktiven Abbindebeschleuniger zum sofortigen Ansteifen, Abbinden und raschen Erhärten gebracht werden kann. Die Festigkeitsentwicklung zeigte keine Unterschiede zu nicht abbindeverzögertem Beton oder Mörtel.

Ferner konnte festgestellt werden, dass unter Verwendung des erfindungsgemässen Abbindeverzögerers hergestellter Beton und Mörtel intensiver reagiert und für die gleiche Abbindebeschleunigung geringere Mengen Abbindebeschleuniger benötigt als unverzögerter Beton und Mörtel.

Hervorragende Resultate zeigte die Verwendung von 2-Phosphonobutan-1,2,4-tricarbonsäure (3-Carboxy-3-phosphonoadipinsäure), deren Alkalisalze und/oder deren Ester mit ein- und/oder mehrwertigen Alkoholen. Als Abbindebeschleuniger, welche kurz vor der Einbringung des Mörtels oder Betons zugesetzt werden, kommen lösliche Alkali- und/oder Erdalkalisalze und/oder Alkalialuminate und/oder Alkalisilikate sowie Salze 3- und/oder 4-wertiger Kationen infrage.

Die Abbindebeschleuniger bestehen vorzugsweise mindestens im wesentlichen aus Kaliumaluminaten und/oder Kaliumcarbonaten und/oder Kaliumhydroxyden, wobei vorteilhafterweise der Aluminiumgehalt 5-15 %, der Carbonat-Gehalt 0-15 % und der Hydroxid-Gehalt 0,2-10 % beträgt.

Ein überraschender Effekt bezüglich Verlängerung der Verarbeitungszeit entsteht bei der Kombination mit Hochleistungsbetonverflüssigern auf der Basis von sulfonsäurehaltigen Polymeren, basierend auf Melamin, Naphthalin, Acrylsäure, Methacrylsäure, Vinylverbindungen, Phenol, Styrol und Lignin.

Die Eigenschaften der unter Verwendung der erfindungsgemässen Abbindeverzögerer hergestellten Betone und Mörtel können gegebenenfalls durch Zusatz üblicher Mengen von Luftporenmitteln und/oder Thixotropierungsmitteln weiter modifiziert werden. Luftporenmittel, die für Beton und Mörtel geeignet sind, sind dem Fachmann bestens bekannt und umfassen Tenside auf natürlicher oder synthetischer Basis, wie z.B. Wurzelharze, Kolophonium, Abietinsäuresalze, Alkyl- oder Aryl-Sulfonate, Alkyl- oder Alkyl-Aryl-Ethylenoxidaddukte, usw. Als bevorzugte Thixotropierungsmittel können z.B. quellfähige Celluloseether, Alginate und/ oder Polysaccharide zugegeben werden.

Spritzbetone und -mörtel, welche die erfindungsgemässen Abbindeverzögerer enthalten, können mit Wasser/ Zement-Werten (W/Z) in den bekannten Grössenordnungen verwendet werden. Meistens wird bei W/Z von 0.5 ± 0.2 gearbeitet.

Durch die Bereitstellung des erfindungsgemässen Abbindeverzögerers für das Nassspritzverfahren eröffnen sich beim Nassspritzen neue Möglichkeiten.

Durch die Verwendung der erfindungsgemässen Abbindeverzögerer für die Herstellung von Spritzbetonen und -mörteln können neben der Erzielung ökologischer und wirtschaftlicher Vorteile neue Anwendungsgebiete für das Nassspritzverfahren erschlossen werden, wie beispielsweise:
- Mehrphasenvortrieb im Tunnelbau
- Rollen- und Gleitschalungsbau
- Bau-, Gruben- und Felssicherung
- schalungsfreie Konstruktionen
- Betonsanierung.

Die Erfindung wird durch die nachfolgenden Beispiele näher erläutert.

Die Wirkung der PBTC (2-Phosphonobutan-1,2,4-tricarbonsäure) und einiger ihrer Ester soll anhand der in den Tabellen 1 bis 3 aufgelisteten Beispielen demonstriert werden.

Die Tabellen 1 und 2 zeigen die Verarbeitbarkeit in Funktion der Zeit (nach DIN 1045), Tabelle 3 den Abbindebeginn in Stunden (SIA 215 mod.). Um gute Vergleichsmöglichkeiten zu schaffen wurde für alle Beispiele die gleiche Grundzusammensetzung, d.h. ein Mörtel mit einem Zement-Sand-Verhältnis (Z/S) von 1:3, und einem Wasser-Zement-Verhältnis (W/Z) von 0.44 gewählt; die Additivkonzentration ist angegeben als das Gewicht der 50 %igen Additiv(Verzögerer)-Lösungen, bezogen auf das Gewicht an hydraulischem Bindemittel.

Ein grosser Vorteil der PBTC gegenüber bekannten Verzögerern ist ihre Polyfunktionalität.

Durch Umsetzung mit Alkoholen lassen sich Reaktionsprodukte mit verbesserten Eigenschaften herstellen.

### Beispiel Ester 1:

1 mol einer 50 %igen wässrigen Lösung von PBTC und 2-Aminomethylpropanol wurden zusammen am Rotationsverdampfer 2 Stunden bei 90°C unter Wasserstrahlvakuum erhitzt. Nach dem Abkühlen verdünnte man den entstandenen Ester mit Wasser auf einen Festkörpergehalt von 50 %.

### Beispiel Ester 2:

In einem 1 l Rundkolben wurde die wässrige PBCT Lösung vorgelegt und anschliessend der Alkohol (2,2'-Dipropylenglykol, Molverhältnis 1:3) zugegeben. Die Mischung wurde auf dem Wasserbad am Rotationsverdampfer unter Vakuum langsam auf 90°C erhitzt. Nach ca. 1 Stunde Reaktionszeit wurde der Reaktionskolben gewogen und die abdestillierte Wassermenge sowie die Säurezahl bestimmt.

Nach ca. einer weiteren Stunde bei 90°C (20 mm Hg) veränderte sich die Säurezahl nicht mehr, der Veresterungsgrad betrug ca. 66 %. Nach dem Abkühlen verdünnte man den entstandenen Ester mit Wasser auf 50 %.

### Beispiel Ester 3:

Eine wässrige PBCT-Lösung wurde am Rotationsverdampfer bis zur Trockene eingedampft und danach mit Glycolsäure (55 %, Molverhältnis 1:2) versetzt. Nach Zugabe von Molekularsieb 4Å und einer Spatelspitze p-Toluolsulfonsäure wurde für 5 Stunden bei 90°C am Rückfluss erhitzt. Nach dem Abkühlen verdünnte man den entstandenen Ester mit Wasser auf 50 %.

### Beispiel Ester 4:

Herstellung analog Beispiel 1, Alkohol = 2-Aethoxyethanol. Nach dem Abkühlen verdünnte man den entstandenen Ester mit Wasser auf 50 %.

Die Vorteile der modifizierten Verbindungen gegenüber PBTC sind in den Tabellen 1 bis 3 dargestellt. Zusammengefasst sind diese:
- geringere Tendenz zum Ansteifen
- höhere Dosierungssicherheit bei geringen Dosierungen
- Senkung der Rohmaterialkosten durch Verwendung billiger Alkohole
- Verlängerung der Verzögerungszeit bei nachfolgend schnellem Abbinden
- gezielte Luftporenbildung für bessere Frost- und Tausalzbeständigkeit.

**Tabelle 1**

| Verarbeitbarkeit in Funktion der Zeit (nach DIN 1045 ) Zusatz von PBTC | | | | | | | | | |
|---|---|---|---|---|---|---|---|---|---|
| ADDITIV | ABM (0') | ABM (30') | ABM (45') | ABM (60') | ABM (120') | ABM (180') | ABM (240') | Luft (0') | Luft (240') |
| | in mm | in mm | in mm | in mm | in mm | in mm | in mm | in % | in % |
| PBTC | 103/167 | 103/173 | 102/171 | 101/157 | 98/154 | 99/152 | 100/144 | 1.6 | 2.3 |
| Ester 2 | 102/172 | 103/172 | 103/175 | 102/174 | 100/158 | 99/152 | 97/139 | 4.7 | 3.1 |
| Mörtel: Z/S = 1/3; W/Z = 0.44; Additiv Konzentration = 0.2 Gew.-% SAND: Normsand: 0-5 mm, ZEMENT: OPC, ABM = Ausbreitmass | | | | | | | | | |

**Tabelle 2**

| Verarbeitbarkeit in Funktion der Zeit (nach DIN 1045 ) Zusatz von PBTC /sulfoniertem Vinylcopolymer mix | | | | | | | | | |
|---|---|---|---|---|---|---|---|---|---|
| ADDITIV | ABM (0') | ABM (30') | ABM (45') | ABM (60') | ABM (120') | ABM (180') | ABM (240') | Luft (0') | Luft (240') |
| | in mm | in mm | in mm | in mm | in mm | in mm | in mm | in % | in % |
| PBTC | 113/182 | 106/179 | | 109/187 | 112/190 | 109/181 | 104/169 | 4.4 | 3.0 |
| Ester 2 | 112/196 | 127/217 | | 119/199 | 115/195 | 116/194 | 112/186 | 5.2 | 4.0 |
| Mörtel: Z/S = 1/3; W/Z = 0.44; Additiv Konzentration = 0.2 Gew.-%; Vinylcopolymer: 1%, SAND: Normsand: 0-5 mm, ZEMENT: OPC, ABM = Ausbreitmass | | | | | | | | | |

**Tabelle 3**

| Abbindebeginn in h (SIA 215 mod.) in Funktion der Dosierung von PBTC und verschiedener Ester | | | | | |
|---|---|---|---|---|---|
| Dosierung Verzögerer | 0.1 % | 0.3 % | 0.6 % | 1.0 % | 1.5 % |
| PBTC | 5.5 | 29.5 | 51 | 4.5 | 3.5 |
| Ester 1 | 4.5 | 8.0 | > 24 | - | |
| Ester 2 | 4.0 | 8.75 | 26 | 48 | >72 |
| Ester 3 | 4.0 | 9.0 | > 24 | | |
| Ester 4 | 4.25 | 13.25 | > 24 | | |
| Mörtel Z/S = 1/3; W/Z = 0.44; Additivkonzentration = variabel Sand: Normsand 0-5 mm, Zement: OPC | | | | | |

Die nachfolgende Tabelle 4 zeigt die Festigkeitsentwicklung der unterschiedlich lang verzögerten Nassspritzbetone nach Zugabe des Abbindebeschleunigers.

**Tabelle 4**

| Druckfestigkeit von Nassspritzbeton mit 450 kg Zement pro m³. W/Z 0,43, Temperatur 18°C, geprüft an Bohrkernen von 5 cm Höhe und 5 cm Durchmesser. | | | | | | |
|---|---|---|---|---|---|---|
| Zusatzmittel-Verzögerer | Dosierung % | Verarbeitungs-Zeit (Std.) | Beschleuniger Dos. (%) | Druckfestigkeit MPa nach | | |
| | | | | 7 Tg | 28 Tg | 90 Tg |
| PBTC | 1,0 | 2 | 4,5 | 35 | 42 | 51 |
| Ester 4 | 1,0 | 8 | 4,5 | 38 | 43 | 58 |
| Ester 4 | 1,4 | 20 | 4,2 | 29 | 36 | 55 |
| Ester 2 | 1 | 11 | 5 | 34 | 39 | 56 |

## Patentansprüche

1. Langzeitverzögerter Mörtel oder Beton für das Nassspritzverfahren enthaltend mindestens einen Abbindeverzögerer, dadurch gekennzeichnet, dass der Abbindeverzögerer
- Phosphonoalkantricarbonsäuren und/oder
- Salze von Phosphonoalkantricarbonsäuren und/oder
- Ester von Phosphonoalkantricarbonsäuren mit einwertigen Alkoholen und/oder
- Ester von Phosphonoalkantricarbonsäuren mit mehrwertigen Alkoholen enthält.

2. Mörtel oder Beton gemäss Anspruch 1, dadurch gekennzeichnet, dass der Abbindeverzögerer 2-Phosphonobutan-1,2,4-tricarbonsäure und/oder deren Salze und/oder deren Ester enthält.

3. Beton oder Mörtel gemäss einem der Ansprüche 1 oder 2, dadurch gekennzeichnet, dass als Ester die Ester mit 2,2'-Dipropylenglykol, 2-Aethoxyethanol, 2-Aminomethylpropanol oder alpha-Hydroxicarbonsäuren, vorzugsweise alpha-Hydroxiessigsäure verwendet werden.

4. Mörtel oder Beton gemäss einem der Ansprüche 1 bis 3, dadurch gekennzeichnet, dass ausserdem Betonverflüssiger oder Hochleistungsbetonverflüssiger, insbesondere Ligninsulfonsäure und/oder sulfonierte Melamin-Formaldehyd-Kondensate und/ oder Naphthalinsulfonsäure-Formaldehyd-Kondensate und/ oder sulfonierte Vinyl-Copolymere und/oder Acryl-Copolymere, in einer Dosierung von 0,2 - 5 %, bezogen auf das Gewicht an hydraulischen Bindemitteln vorhanden ist.

5. Mörtel oder Beton nach einem der Ansprüche 1 bis 4, dadurch gekennzeichnet, dass er ausserdem ein Thixotropierungsmittel, insbesondere quellfähige Celluloseaether und/oder Alginate und/oder Polysaccharide, enthält.

6. Mörtel oder Beton gemäss einem der Ansprüche 1 bis 5, dadurch gekennzeichnet, dass er ausserdem ein Luftporenmittel auf Basis natürlicher und/oder synthetischer Tenside enthält.

7. Nassspritzverfahren, dadurch gekennzeichnet, dass ein langzeitverzögerter Mörtel- oder Beton gemäss einem der Ansprüche 1 bis 6 hergestellt und dass diesem ein Abbindebeschleuniger erst zu einem Zeitpunkt beigegeben wird, zu welchem die Erhärtung der resultierenden Mischung kurzfristig gewünscht ist.

8. Verfahren gemäss Anspruch 7, dadurch gekennzeichnet, dass der Abbindebeschleuniger
- Alkalialuminate
- Alkalisilikate
- lösliche Alkalisalze
- lösliche Erdalkalisalze
- lösliche Salze 3-wertiger Kationen und
- lösliche Salze 4-wertiger Kationen enthält.

9. Verfahren gemäss Anspruch 7 oder 8, dadurch gekennzeichnet, dass der Abbindebeschleuniger Kaliumaluminate und/oder Kaliumsilikate und/oder Kaliumhydroxid und/oder Kaliumcarabonat, insbesonders Kaliumaluminat enthält.

10. Verfahren gemäss einem der Ansprüche 7 bis 9, dadurch gekennzeichnet, dass der Abbindeverzögerer dem Mörtel oder Beton in einer Dosierung von 0,01 bis 5 % des Gewichts des hydraulischen Bindemittels zugegeben wird.

11. Verfahren gemäss einem der Ansprüche 7 bis 10, dadurch gekennzeichnet, dass der Abbindebeschleuniger in einer Dosierung von 0,5 bis10 %, bezogen auf das Gewicht des hydraulischen Bindemittels zugegeben wird.

12. Verwendung eines Abbindeverzögerers wie in einem der Ansprüche 1 bis 3 definiert zur Abbindeverzögerung von Mörtel oder Beton für das Nassspritzverfahren.

13. Verwendung gemäss Anspruch 12, dadurch gekennzeichnet, dass der Abbindeverzögerer als eine stabile Lösung mit Betonverflüssiger oder Hochleistungsbetonverflüssiger vorliegt.

14. Verwendung eines Abbindebeschleunigers wie in Anspruch 8 oder 9 definiert zur Steuerung des Abbindeverhaltens hydraulischer Bindemittel in Gegenwart eines Abbindeverzögerers wie in einem der Ansprüche 1 bis 3 definiert, vorzugsweise hydraulischer Bindemittel in Mörtel oder Beton, insbesonders in Mörtel oder Beton für das Nassspritzverfahren.

15. Verwendung gemäss Anspruch 14, dadurch gekennzeichnet, dass die Dosierung 0,5 - 10 % des Gewichts des hydraulischen Bindemittels beträgt, vorzugsweise eines hydraulischen Bindemittels enthaltend 0,01 - 5 % Abbindeverzögerer, bezogen auf das Gewicht des hydraulischen Bindemittels.

16. Abbindeverzögerer, dadurch gekennzeichnet, dass er ein Ester der 2-Phosphonobutan-1,2,4-tricarbonsäure mit 2,2'-Dipropylenglykol, 2-Aethoxyethanol, 2-Aminomethylpropanol oder Hydroxicarbonsäuren, vorzugsweise Hydroxiessigsäure ist.

## Claims

1. Long term retarded mortar or concrete for wet spaying containing at least one set retarder, characterised in that the set retarder contains
- phosphonic alkanetricarboxylic acids and/or
- salts of phosphonic alkanetricarboxylic acids and/or
- esters of phosphonic alkanetricarboxylic acids with mono-valent alcohols and/or
- esters of phosphonic alkane tricarboxylic acids with polyvalent alcohols.

2. Mortar or concrete according to claim 1, characterised in that the set retarder contains 2-phospho-1,2,4-tricarboxylic acid and/or their salts and/or their esters.

3. Mortar or concrete according to any one of the claims 1 or 2, characterised in that those esters are used as esters that are with 2,2'-dipropyleneglycol, 2-ethoxyethanol, 2-aminoethylepropanol or alpha-hydroxy carboxylic acids, preferably alpha-hydroxy carboxylic acid.

4. Mortar or concrete according to any one of the claims 1 to 3, characterised in that furthermore a plastisizer or super-plastisizer is present, particularly ligninesulfonic acid and/or sulfonised melamin-formaldehyde-condensates and/or naphthalene sulfonic acid/formaldehyde condensates and/or sulfonised vinyl-copolymers and/or acryl-copolymers in a dose of 0,2 - 5% based on the weight of hydraulic binders.

5. Mortar or concrete according to any one of the claims 1 to 4, characterised in that it furthermore contains a thixotropic agent, particularly swellable cellulose ethers and/or alginates and/or polysaccarides.

6. Mortar or concrete according to any one of the claims 1 to 5, characterised in that it furthermore contains an air entraining agent on the basis of natural and/or synthetic surfactants.

7. Wet-spraying method, characterised in that a long-term mortar or concrete according to any one of the claims 1 to 6 is produced and that to this mixture a setting accelerator is added only at a moment, in which the hardening of the resulting mixture is desired within a brief delay.

8. Method according to claim 7, characterised in that the setting accelerator contains
- alkali aluminates,
- alkali silicates,
- soluble alkali salts,
- soluble alkaline earth metal salts,
- soluble salts of 3-valent cations,
- soluble salts of 4-valent cations.

9. Method according to claim 7 or 8, characterised in that the setting accelerator contains potassium aluminates and/or potassium silicates and/or potassium hydroxide and/or potassium carbonate, particularly potassium aluminate.

10. Method according to any one of the claims 7 to 9, characterised in that the setting retarder is added to the mortar or concrete in a dose of 0,01 to 5% of the weight of the hydraulic binder.

11. Method according to any one of the claims 7 to 10, characterised in that the setting accelerator is added in a dose of 0,5 to 10% based on the weight of the hydraulic binder.

12. Use of the setting retarder as defined in one of the claims 1 to 3 for the retarding of the setting of mortar or concrete for the wet-spraying method.

13. Use according to claim 12, characterised in that the setting retarder is present as stable solution with plastisizers or super-plastisizers.

14. Use of a setting accelerator as defined in one of the claims 8 or 9 for the regulation of the setting behaviour as defined in one of the claims 1 to 3, preferably hydraulic binders in mortar or concrete, particularly in mortar or concrete for wet-spraying methods.

15. Use according to claim 14, characterised in that the dosage is amounting to 0,5% - 10% of the weight of the hydraulic binder, preferably of a hydraulic binder containing 0,01 - 5% of an setting retarder, based on the weight of the hydraulic binder.

16. Setting retarder, characterised in that it is an ester of the 2-phosphonobutanel-1,2,4-tricarboxylic acide with 2,2'-dipropyleneglycol, 2-ethoxyethanol, 2-aminomethylepropanol or alpha-hydroxy carboxylic acids.

## Revendications

1. Mortier ou béton avec durée d'utilisation prolongée pour la projection humide contenant un retardeur de prise, caractérisé en ce que le retardateur de prise contient:
- des acides de phosphonalcanes tricarboxyliques et/ou
- des sels d'acides de phosphonalcanes tricar-boxyliques et/ou
- des esters d'acides de phosphonalcanes tricarboxyliques avec des alcools monovalents et/ou
- des esters d'acides de phosphonalcanes tricarboxyliques avec des alcools polyvalents.

2. Mortier ou béton suivant la revendication 1, caractérisé en ce que le retardateur de prise contient de l'acide 2-phosphonobutane-1,2,4-tricarboxylique et/ou ses sels et/ou ses esters.

3. Mortier ou béton suivant l'une des revendications 1 ou 2, caractérisé en ce que les esters de 2,2'-dipropylèneglycole, 2-éthoxyéthanol, 2-aminométhylpropanol ou des acides alpha-hydroxy tricarboxyliques, par préférence de l'acide alpha-hydroxy acétique sont utilisés comme ester.

4. Mortier ou béton suivant l'une des revendications 1 à 3, caractérisé en ce qu'il contient en outre un fluidifiant de béton ou un superfluidifiant, en particulier de l'acide lignosulfonique et/ou des condensats sulfonés de mélanine-formaldéhyde et/ou des condensats de l'acide de naphthalènosulfonique-formaldehyde et/ou des copolymères sulfonés de vinyle et/ou des copolymères d'acryle dans une teneur de 0,2 à 5%, par rapport au poids des liants hydrauliques.

5. Mortier ou béton suivant l'une des revendications 1 à 4, caractérisé en ce qu'il contient en outre un agent thixotropique tel que l'éther de cellulose et/ou des alginates et/ou des polysaccarides, particulièrement ceux qui sont susceptibles de gonflement.

6. Mortier ou béton suivant l'une des revendications 1 à 5, caractérisé en ce qu'il contient en outre un agent formant des pores d'air basés sur des tensides naturels et/ou synthétiques.

7. Projection humide, caractérisée en ce qu'un mortier ou un béton avec une durée d'utilisation prolongée suivant l'une des revendications 1 à 6 est fabriqué et qu'un accélérateur de prise n'est rajouté qu'au moment où le durcissement du mélange résultant est souhaité dans des brefs délais.

8. Procédé suivant la revendication 7, caractérisé en ce que l'accélérateur de prise contient des
- aluminates de métaux alcalins
- silicates de métaux alcalins
- sels de métaux alcalins solubles
- sels de métaux alcalino-terreux solubles
- sels de cations trivalents solubles et
- sels de cations quadrivalents solubles.

9. Procédé suivant la revendication 7 ou 8, caractérisé en ce que l'accélérateur de prise contient des aluminates de potassium et/ou des silicates de potassium et/ou de l'hydroxyde de potassium et/ou du carbonate de potassium, particulièrement de l'aluminate de potassium.

10. Procédé suivant l'une des revendications 7 à 9, caractérisé en ce que le retardateur de prise est rajouté au mortier ou au béton dans une quantité de 0,01 à 5% par rapport au poids du liant hydraulique.

11. Procédé suivant l'une des revendications 7 à 10, caractérisé en ce que l'accélérateur de prise est rajouté dans une quantité de 0,5 à 10% par rapport au poids du liant hydraulique.

12. Utilisation d'un retardateur de prise comme défini dans l'une des revendications 1 à 3 pour le retardement de prise de mortier ou béton pour la projection humide.

13. Utilisation suivant la revendication 12, caractérisée en ce que le retardateur de prise se présente comme une solution stable avec du fluidifiant de béton ou du superfluidifiant de béton.

14. Utilisation d'un retardateur de prise comme défini dans les revendications 8 ou 9 pour la maîtrise du comportement de prise des liants hydrauliques en présence d'un retardateur de prise comme défini dans l'une des revendications 1 à 3, par préférence des liants hydrauliques dans du mortier ou du béton, particulièrement dans du mortier ou du béton pour la projection humide.

15. Utilisation suivant la revendication 14, caractérisée en ce que le dosage s'élève de 0,5 à 10% du poids du liant hydraulique, par préférence d'un liant hydraulique contenant 0,01 à 5% de retardateur de prise, par rapport au poids du liant hydraulique.

16. Retardateur de prise, caractérisé en ce qu'il est un ester de l'acide 2-phosphonobutane-1,2,4-tricarboxylique avec du 2,2'-dipropylèneglycole, 2-ethoxyéthanole, 2-aminoéthylpropanol ou de l'acide alpha-hydroxycarboxylique, par préférence de l'acide alpha hydroxyacétique.
